# EUROPÄISCHE PATENTSCHRIFT

(11) **EP 0 592 383 B1**
(45) Veröffentlichungstag und Bekanntmachung des Hinweises auf die Patenterteilung: **14.05.1997**
(21) Anmeldenummer: 93890170.9
(22) Anmeldetag: 03.09.1993
(51) Int. Cl.: B23Q 1/25, B23Q 17/22

(54) **Manuell gesteuerte Drehmaschine**
Manually controlled turning machine
Tour à commande manuelle

(30) Priorität: 10.09.1992 AT 1805/92
(43) Veröffentlichungstag der Anmeldung: 13.04.1994
(73) Patentinhaber: RSF-Elektronik Gesellschaft m.b.H., A-5121 Tarsdorf 93 (AT)
(72) Erfinder: Rieder, Heinz, A-5110 Oberndorf (AT)
(74) Vertreter: Hübscher, Heiner, Dipl.-Ing.

(56) Entgegenhaltungen:
- EP-A- 0 064 741
- EP-A- 0 192 787
- CH-A- 376 347
- DD-C- 49 749
- DE-A- 2 365 373
- DE-A- 3 722 871
- DE-A- 3 905 288
- US-A- 2 926 345
- TOOLING AND PRODUCTION Bd. 41, Nr. 3 , Juni 1975 , SOLON US Seiten 39 - 41 E.PACINI 'Why digital readouts'

## Beschreibung

Die Erfindung betrifft eine manuell gesteuerte Drehmaschine nach dem Oberbegriff des Patentanspruches.

Eine derartige Maschine ist aus der DE 39 05 288 A bekannt. Bei dieser bekannten Maschine sind zur Erzielung einer genaueren Einstellung von Ober- und Unterteil Getriebe vorgesehen und die beiden, die Quer- und Längsvorschubbewegung durchführenden Elemente werden über eine Zwischenplatte verbunden. Sinn der Konstruktion ist es, bei Kleinserien, bei denen der Einsatz von CNC-Maschinen zu aufwendig wäre, zusätzliche Einstellmöglichkeiten für das Werkzeug und den Bearbeitungsverlauf zu erhalten. Die Anzeige der Drehstellung, also der Verstellung um die Hochachse, erfolgt mit Hilfe einer einfachen, kreisringförmigen Meßskala mit Noniusablesung.

Sowohl mit dieser Ausgestaltung der Drehmaschine als auch bei ähnlichen, einfacheren Konstruktionen, bei denen ein verstellbarer Oberschlitten drehbar und einstellbar auf einem parallel zur Spindelachse verstellbaren Unterteil gelagert ist, ist zwar die Herstellung von konischen Drehteilen möglich, doch ist diese Herstellung bisher umständlich und zeitaufwendig. Die bisherige Art der Fertigung umfaßt bei einem weitverbreitet eingesetzten Verfahren folgende Arbeitsgänge:
Ermittlung des Konuswinkels aus der Durchmesser- und Längenangabe der Zeichnung, falls dieser Winkel in der Zeichnung nicht angegeben ist.
Einstellung des Konuswinkels am Schlittenoberteil mit Hilfe einer Noniusskala am Drehkopf. Schon wegen der Ableseungenauigkeit ist eine exakte und wiederholbare Dreh- und damit Winkeleinstellung mit einer Genauigkeit in Bruchteilen von Winkelgraden nicht möglich.
Drehen eines Muster-Konusteiles mit dem eingestellten Winkel.
Vermessen des Musterteiles mit Hilfe einer eigens angefertigten Konuslehre die z. B. eine eingefärbte Innenseite aufweist, so daß beim Einfügen und leichtem Drehen des Musterkonusteiles anhand der am Konus sichtbaren Schleifspuren eine Einschätzung der Maßabweichung möglich wird.
Nachstellen des Drehkopfes und damit der Dreheinstellung des Schlittenoberteiles um einen geschätzten Wert und Anfertigung eines weiteren Konusteiles.
Neuerliche Kontrolle der Maßgenauigkeit mit der Konuslehre und allfällige Wiederholung der beschriebenen Arbeitsgänge bis der hergestellte Konus innerhalb der zulässigen Toleranzen liegende Abmessungen aufweist.

Auch bei anderen bekannten Herstellungsverfahren, bei denen der hergestellte Musterkonus in anderer Weise überprüft wird, ist jeweils meist eine mehrfache Wiederholung der Arbeits- und Einstellvorgänge notwendig, bis schließlich die gültige Einstellung des Schlittenoberteiles erreicht ist.

Manuell gesteuerte Drehmaschinen werden schon zum Teil mit digitalen Längenmeßsystemen und Anzeigeeinrichtungen zur Messung der Bewegung von Längs- und Querschlitten ausgestattet oder nachträglich ausgerüstet.

Aufgabe der Erfindung ist die Schaffung einer Drehmaschine nach dem Oberbegriff des Patentanspruches, bei der unter Mitbenützung von Elementen eines digitalen Längenmeßsystems mit relativ einfachen Mitteln auch die genaue Herstellung konischer Teile ohne vorherige Herstellung und Vermessung von Probewerkstücken bei genauer Einhaltung bzw. Bestimmung des Konuswinkels ermöglicht wird.

Die gestellte Aufgabe wird durch die Merkmale des Patentanspruches gelöst.

Derartige Winkelschrittgeber können ein hohes Auflösungsvermögen haben, so daß eine Anzeige und Einstellung in kleinen Bruchteilen von Winkelgraden ermöglicht wird. Je nach Konstruktion kann der Winkelschrittgeber bereits bei der Herstellung der Drehmaschine in den Werkzeugschlitten integriert oder auch an einer fertigen Maschine angebracht werden. Es können nach verschiedenen Abtastprinzipien arbeitende digitale Winkelschrittgeber, z. B. optoelektronisch, kapazitiv, induktiv, interferometrisch, potentiometrisch oder mechanisch abtastende Winkelschrittgeber Verwendung finden. Vorzugsweise aber nicht zwingend wird eine inkrementale Winkelteilung über entsprechende Abtasteinrichtungen zur Erzeugung der Abtastsignale abgetastet, wobei analoge Abtastsignale über entsprechende Formerstufen in digitale Zählsignale aufbereitet und gegebenenfalls eine elektronische Unterteilung des Maßstabteilungsschrittes vorgenommen werden kann.

Die Dreheinstellung des Schlittenoberteiles wird auf der digitalen Anzeigevorrichtung der Drehmaschine dargestellt. Diese Anzeigevorrichtung kann an sich für die Längenangaben in den Hauptachsen (X-, Y-, Z-Achse) bestimmt sein. Man kann nun hier ein eigenes Anzeigefeld für die Dreheinstellung vorsehen oder eine der Achseanzeigen mit der Winkelanzeige beaufschlagen, da diese Winkelanzeige ohnehin nur für die Einstellung benötigt wird. Der Winkel selbst kann über die Eingabeeinheit eingegeben oder mittels des Rechners aus den Werkstückabmessungen und der Zeichnung berechnet werden. Ein digitaler Drehmelder kann jeweils vier um 90° phasenverschobene in der Grundform sinusförmige Analogsignale erzeugen, die zu den Zählsignalen für die Anzeigeeinheit ausgewertet werden, wobei auch eine Erkennung der Dreh- und damit Zählrichtung stattfindet. Es ist auch möglich am Maßstab des Winkelschrittgebers Referenzmarken vorzusehen, über die durch Setzung des Zählers auf einen bestimmten Wert eine eindeutige Beziehung zu einer Nullage oder sonstigen definierten Winkellage hergestellt wird. Nach einer Möglichkeit wird der Konuswinkel bei in einer Neutralstellung befindlichem Schlittenoberteil eingegeben und dieser Oberteil wird verdreht, bis die Anzeige "Null" erreicht, also der vorgegebene Winkel eingestellt ist. Nach einer anderen Möglichkeit wird der Schlittenoberteil aus seiner Nullstellung verdreht, bis der erreichte Drehwinkel dem vorher eingegebenen Konuswinkel entspricht.

Eine bevorzugte Ausgestaltung des Erfindungsgegenstandes sieht vor, daß der Anzeigeeinrichtung ein Rechner mit Eingabeeinheit zur Vorgabe des der Dreheinstellung entsprechenden Winkels bzw. zur Berechnung und Vorgabe dieses Winkels aus den Werkstückabmessungen zugeordnet ist.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: den Werkzeugschlitten einer bekannten manuell gesteuerten Drehmaschine schematisiert im Schaubild und
- Fig. 2: in vereinfachter Darstellungsweise einen erfindungsgemäß ausgestalteten Werkzeugschlitten im Schaubild mit einem Blockschema der Auswertungs- und Anzeigeeinheit.

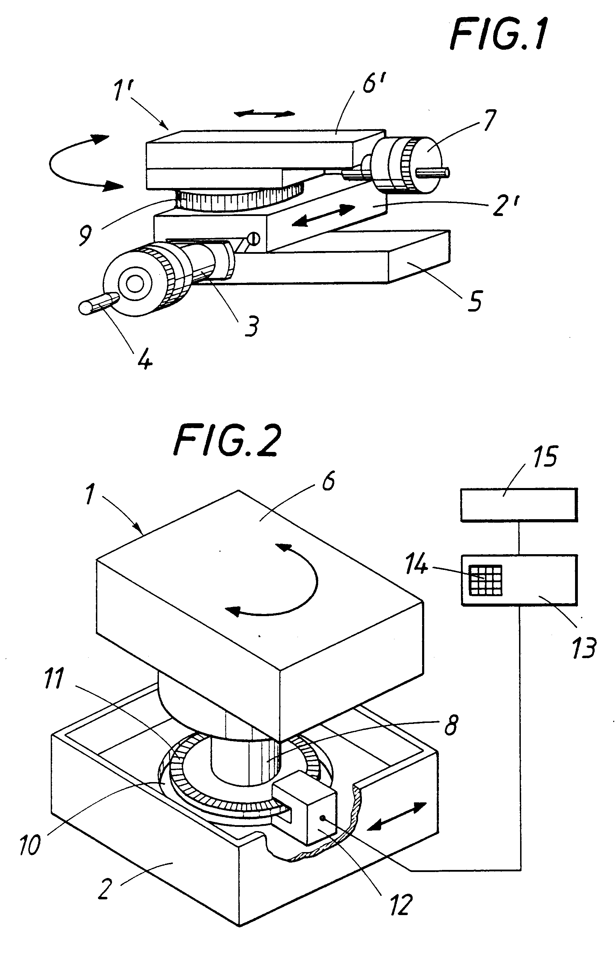

In den Fig. 1 und 2 wurden gleiche bzw. äquivalente Teile mit gleichen Bezugszeichen bezeichnet, in Fig. 1 aber mit einem Strich zusätzlich gekennzeichnet.

Nach Fig. 1 ist bei einer bekannten Drehmaschine der Werkzeugschlitten 1' mit einem Unterschlitten 2' versehen, der in bekannter Weise zur Spindelachse der Drehmaschine verstellbar und über eine Einstelleinrichtung 3 mit Kurbel 4 senkrecht zur Spindelachse (also in Richtung der Y-Achse) einstellbar ist. Auf diesem am Längsschlitten 5 abgestützen Unterschlitten 2' ist ein Oberschlitten 6' um eine Hochachse drehbar und mittels einer Einstelleinrichtung 7 verschiebbar, wobei dieser Oberschlitten mit einem Werkzeughalter ausgestattet ist. Die in Fig. 1 nicht sichtbare Drehachse wurde in Fig. 2 mit 8 bezeichnet.

Nach Fig. 1 kann die Schwenkeinstellung des Oberschlittens 6' über eine Meßskala 9 mit nicht dargestellter Noniusablesung grob erfaßt werden.

In Fig. 2 wurden die Teile 3, 4, 5 und 7 nach Fig. 1 nicht noch einmal dargestellt. Im Unterschlitten 2 ist eine Vertiefung 10 vorgesehen, in der eine mit der Hochachse 8 drehbare Teilscheibe 11 eines digitalen Winkelschrittgebers geschützt untergebracht ist. Für die Teilscheibe 11 ist wenigstens eine Abtasteinheit 12 zur Erzeugung von Abtastsignalen vorgesehen, durch deren Zählung bzw. sonstige Erfassung die Dreheinstellung des Oberschlittens 6 gegenüber dem Unterschlitten 2 erfaßbar ist. Die Abtastsignale werden einer Auswertungseinheit 13 zugeführt, die mit einem Tastenfeld 14 versehen ist und zusätzlich Rechnerfunktion besitzt, so daß je nach dem gewählten Programm entweder mittels des Tastenfeldes ein aus der Werkstückzeichnung ersichtlicher Konuswinkel eingegeben und auf einer Anzeige 15 angezeigt wird oder dieser Konuswinkel aus den Werkstückabmessungen berechnet und ebenfalls angezeigt werden kann.

Die Anzeige 15 wird durch die Anzeigeeinrichtung eines digitalen Längenmeßsystems der Drehmaschine selbst verkörpert. Dabei kann diese Anzeigeeinrichtung ein eigenes Anzeigefeld für die Meßwerte des Winkelschrittgebers 11, 12 zusätzlich zu den Anzeigen des Längenmeßsystems enthalten oder es wird ein ansonsten einer Meßwertanzeige des Längenmeßsystems dienendes Anzeigefeld mittels eines Umschalters für die Anzeige des Winkels aktiviert.

Beim Ausführungsbeispiel wird angenommen, daß der Oberschlitten 6 aus einer z. B. zur Spindelachse parallelen Nullage verstellt und dabei der den Konuswinkel angebende Anzeigewert durch die Abtastsignale der Abtasteinheit 12 dekrementiert wird, so daß der gewünschte Winkel des Oberschlittens eingestellt ist, wenn auf der Anzeige 15 der Anzeigewert "Null" erscheint. Es ist aber selbstverständlich auch möglich gegebenenfalls in einer zweiten Anzeige den gewünschten Winkelwert anzuzeigen und die Drehwinkelverstellung aus der Nullage heraus zu messen, bis die Hauptanzeige ebenfalls den gewünschten Konuswinkel anzeigt.

## Patentansprüche

1. Manuell gesteuerte Drehmaschine, mit einem Werkzeugschlitten (2, 6), der einen parallel zur Spindelachse der Drehmaschine verstellbaren Unterteil (2) und einen um eine Hochachse (8) gegenüber dem Unterteil (2) einstellbar verdrehbaren Oberteil (6) mit einer Längsvorschubeinrichtung und einem Werkzeughalter für das jeweilige Werkzeug sowie eine Meßeinrichtung zur Erfassung der Dreheinstellung um die Hochachse aufweist, gekennzeichnet durch die Merkmale:
- zur Erfassung der Dreheinstellung des Schlittenoberteiles (6) um die Hochachse (8) ist als Meßeinrichtung ein digitaler Winkelschrittgeber (11, 12) mit zugeordneter Anzeigeeinrichtung vorgesehen;
- die Anzeigeeinrichtung (15) wird durch die Anzeigeeinrichtung eines digitalen Längenmeßsystems der Drehmaschine verkörpert, wobei die Anzeigeeinrichtung (15) jeweils ein eigenes Anzeigefeld für die Meßwerte des Winkelschrittgebers (11, 12) und des Längenmeßsystems aufweist oder ein ansonsten einer Meßwertanzeige des Längenmeßsystems dienendes Anzeigefeld mittels eines Umschalters für die Anzeige der Stellwerte des Winkelschrittgebers (11, 12) aktivierbar ist;
- der Anzeigeeinrichtung (15) ist ein Rechner (13) mit Eingabeeinheit (14) zur Vorgabe des der Drehstellung entsprechenden Winkels bzw. zur Berechnung und Vorgabe dieses Winkels aus den Werkstückabmessungen zugeordnet.

## Claims

1. A manually controlled lathe comprising a tool carriage (2, 6) comprising a bottom part (2) adjustable parallel to the lathe spindle axis and a top part (6) adjustable by rotation around a vertical axis (8) relative to the bottom part (2) and with a longitudinal feed device, a holder for the respective tool and a measuring device for detecting the rotary adjustment around the vertical axis, characterised by the following features:
- the rotary adjustment of the top part (6) of the carriage around the vertical axis (8) is detected by a measuring device in the form of a digital selsyn (11, 12) associated with a display device;
- the display device (15) is embodied by the display device of a digital length-measuring system of the lathe, the display device (15) having separate display fields for the measurements of the selsyn (11, 12) and of the length-measuring system respectively or otherwise a display field for displaying the measurements of the length-measuring system can be activated by a change-over switch for displaying the control values of the selsyn (11, 12), and
- the display device (15) is a computer (13) with an inputting unit (14) for presetting the angle corresponding to the rotary adjustment or for calculating and presetting this angle on the basis of the workpiece dimensions.

## Revendications

1. Tour à commande manuelle, comprenant un chariot porte-outil (2, 6), lequel comporte une partie inférieure (2) qui peut être déplacée parallèlement à l'axe de la broche du tour et une partie supérieure (6) qui peut tourner d'une manière réglable par rapport à la partie inférieure (2) autour d'un axe vertical (8) et qui comprend un dispositif d'avance longitudinale et un porte-outil destiné à l'outil concerné, ainsi qu'un dispositif de mesure pour déterminer le réglage en rotation autour de l'axe vertical, caractérisé par les particularités suivantes :
- pour déterminer le réglage en rotation de la partie supérieure (6) du chariot autour de l'axe vertical (8), il est prévu comme dispositif de mesure un capteur de rotation incrémentiel numérique (11, 12) et un dispositif d'affichage qui lui est associé ;
- le dispositif d'affichage (15) est matérialisé par le dispositif d'affichage d'un système de mesure numérique des longueurs du tour, cependant que le dispositif d'affichage (15) comporte à chaque fois un champ d'affichage propre pour les valeurs mesurées du capteur de rotation incrémentiel (11, 12) et du système de mesure des longueurs, ou qu'un champ d'affichage qui sert sinon à un affichage des valeurs mesurées du système de mesure des longueurs peut être activé au moyen d'un commutateur pour l'affichage des valeurs de réglage du capteur de rotation incrémentiel (11, 12) ;
- au dispositif d'affichage (15) est associé un calculateur (13) comprenant une unité d'introduction des données (14) en vue de prédéterminer l'angle qui correspond à la position en rotation ou, respectivement, de calculer et de prédéterminer cet angle à partir des dimensions de la pièce.
